# EUROPÄISCHE PATENTANMELDUNG

(11) **EP 2 123 449 A1**
(43) Veröffentlichungstag der Anmeldung: **25.11.2009**
(21) Anmeldenummer: 09009869.0
(22) Anmeldetag: 15.12.2006
(51) Int. Cl.: B32B 27/08, B32B 27/32, B65D 33/18

(54) **Verpackung**

(30) Priorität: 16.12.2005 DE 102005060728
(62) Teilanmeldung aus: 06841002.6
(71) Anmelder: Wipak Gryspeert S.A.S., 59166 Bousbecque (FR)
(72) Erfinder: Cassel, Antoine, 59960 Neuville en Ferrain (FR); Muhonen, Paavo, 15140 Lahti (FI)
(74) Vertreter: Kutzenberger, Helga

(57) **Zusammenfassung**

Die vorliegender Erfindung betrifft eine Verpackung aus einer flexiblen, siegelbaren, mehrschichtigen Kunststoffolie in Form eines Sackes oder Beutels bestehend aus einer Vorderwand und einer Rückwand und eine auf die Vorderwand gefaltete Verschlußlasche, die durch längsseitliches und transversales Versiegeln der Innenschicht der Lasche gegen die Außenschicht der Vorderwand des Beutels verschlossen ist, wobei die Kunststoffolie eine dem Füllgut zugewandte, siegelbare Innenschicht aus wenigstens einem Polyethylen und/oder wenigstens einem olefinischen Copolymerisat aus Ethylen und einem α-Olefin mit mindestens 4C-Atomen als eine Oberflächenschicht und auf der anderen Oberfläche der Kunststoffolie als Außenschicht eine Schicht aus wenigstens einem Polypropylen und ggf. üblichen Additiven aufweist.

## Beschreibung

Die vorliegender Erfindung betrifft eine Verpackung aus einer flexiblen, siegelbaren. mehrschichtigen Kunststoffolie in Form eines Sackes oder Beutels bestehend aus einer Vorderwand und einer Rückwand, die einander gegenüberliegen und durch zwei Seitensiegelnähte zu einem Sack oder Beutelschlauch versiegelt sind, dessen dem Boden des Schlauches oder Sackes gegenüberliegendes, offenes Kopfende durch eine von einem Überstand der Rückwand gebildete und an oder in die Nähe des offenen Kopfendes auf die Vorderwand gefaltete Verschlußlasche durch längsseitliches Versiegeln und transversales Versiegeln der Innenschicht der Lasche gegen die Außenschicht der Vorderwand des Beutels verschlossen ist, wobei die mehrschichtige Kunststoffolie eine dem Füllgut zugewandte, siegelbare Innenschicht aus wenigstens einem Polyethylen und/oder wenigstens einem olefinischen Copolymerisat aus Ethylen und einem α-Olefin mit mindestens 4C-Atomen als eine Oberflächenschicht und auf der anderen Oberfläche der mehrschichtigen Kunststoffolie als Außenschicht eine Schicht aus Polypropylen und ggf. üblichen Additiven aufweist.

Verpackungen der vorstehend beschriebenen Art sind bereits aus dem Stande der Technik zum Verpacken von Gütern unterschiedlichster Art, vorzugsweise von Lebensmitteln, besonders bevorzugt von festen oder halbfesten Lebensmitteln, wie z. B. Blockkäse, vorzugsweise zum mehrmaligen Entnehmen bereits bekannt.

Gemäß der Offenbarung in EP-A-O 696 991 werden solche Verpackungen aus einer Mehrschichtfolie umfassend eine dem Füllgut zugewandte Innenschicht aus Polyethylen oder einem Copolymer von Polyethylen und Polypropylen, einer außenliegenden Oberflächenschicht aus einem Copolymer von Polyethylen und Polypropylen und einer an die Außenschicht angrenzende Schicht aus Polypropylen hergestellt. Solche Verpackungen weisen einen durch Siegeln der Innenschicht einer Verschlußlasche gegen die Außenschicht der Vorderwand der Verpackung vorzugsweise peelbaren Verschluß auf, der ein Öffnen und Wiederverschließen nach Entnahme eines Teiles des verpackten Gutes mit Hilfe der Verschlußlasche erlaubt.

Im Zuge der Entwicklung von Verpackungsmaschinen, die mit einer immer höheren Verpackungsgeschwindigkeit betrieben werden können, stellte sich die Aufgabe, die Herstellung von Verpackungen, wie sie u. a. auch in EP-A-O 696 991 beschrieben sind, effizienter durchzuführen, d. h. deren Produktionsgeschwindigkeit zu erhöhen, ohne dass das Öffnungsverhalten der Verpackungen beeinträchtigt, sondern vielmehr sogar verbessert wird. Unter der Produktionsgeschwindigkeit wird die Anzahl der produzierten Verpackungen (mit höchstens 1 % Ausschuß) pro Zeiteinheit verstanden.

Diese Aufgabe wird durch das Bereitstellen der erfindungsgemäßen Verpackung gelöst, die aus einer flexiblen, siegelbaren, mehrschichtigen Kunststoffolie in Form eines Sackes oder Beutels gebildet ist, der eine Vorderwand und einer Rückwand aufweist, die einander gegenüberliegen und durch zwei Seitensiegelnähte zu einem Sack oder Beutelschlauch versiegelt sind, dessen dem Boden des Sackes oder Beutels gegenüberliegendes, offenes Kopfende durch eine von einem Überstand der Rückwand gebildete und an oder in die Nähe des offenen Kopfendes auf die Vorderwand gefaltete Verschlußlasche durch längsseitliches Versiegeln und transversales Versiegeln der Innenschicht der Verschlußlasche gegen die Außenschicht der Vorderwand des Beutels verschlossen ist, dadurch gekennzeichnet, dass die mehrschichtige Kunststoffolie eine dem Füllgut zugewandte, siegelbare Innenschicht aus wenigstens einem Polyethylen und/oder wenigstens einem olefinischen Copolymeren aus Ethylen und einem α-Olefin mit mindestens 4C-Atomen als Oberflächenschicht und eine auf der anderen Oberfläche der mehrschichtigen Kunststoffolie als ggf. mehrlagige Außenschicht eine Schicht aus Polypropylen und ggf. üblichen Additiven umfaßt.

Durch den Einsatz einer mehrschichtigen Kunststoffolie der erfindungsgemäßen Art gelingt es, die Anzahl der pro Zeiteinheit produzierten Verpackungen um mehr als 10 %, vorzugsweise um mehr als 20 % zu erhöhen.

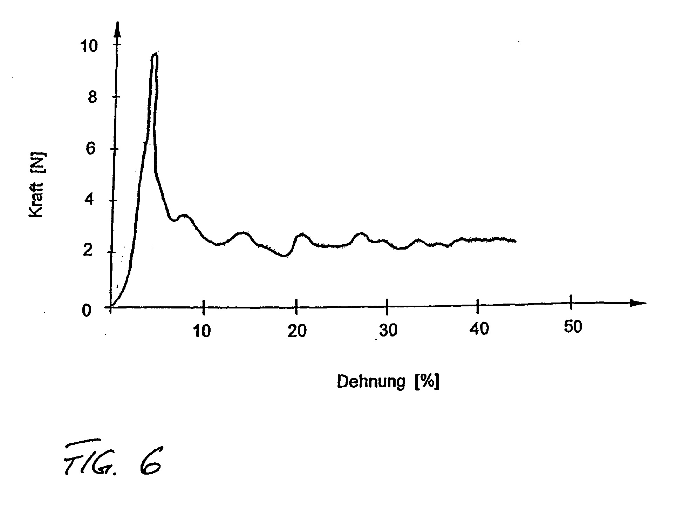

Darüber hinaus gewährleisteten die erfindungsgemäßen Verpackungen ein verbessertes Öffnungsverhalten dadurch, dass nur mit einer ruckartigen Kraftanwendung, die selbst von geschwächten Menschen ohne große Mühe aufgebracht werden kann, die Versiegelung der Verschlußlasche der erfindungsgemäßen Verpackung soweit bereits gelockert werden kann, dass das weitere Öffnen der Verschlußlasche durch eine minimale Kraftanstrengung, d. h. durch eine um mindestens 30 %, vorzugsweise um mindestens 50 %, gegenüber der anfänglichen Kraftanwendung verminderten Kraftanwendung durchgeführt werden kann. Ein entsprechendes Kraft-Dehnungs-Diagramm gemessen analog der nachstehend angegebenen Methode zur Bestimmung der Siegelfestigkeit ist in Figur 6 veranschaulicht. Trotz der ruckartigen Kraftanwendung tritt auch praktisch keine Delaminierung der Verschlußlasche auf, so dass keine delaminierten Folienteile das Konsumgut verunreinigen können.

Durch den Einsatz einer mehrschichtige Kunststoffolie mit dem vorstehend angegebenen Aufbau bei der Herstellung einer erfindungsgemäßen Verpackung gelingt es, dieses Öffnungsverhalten trotz erhöhter Produktionsgeschwindigkeit zu erzielen.

Die zum Einsatz kommende mehrschichtige Kunststoffolie weist als siegelbare Innenschicht, d. h. als Schicht, die dem Füllgut bei einem aus der mehrschichtigen Kunststoffolie hergestellten, gefüllten Verpackungsbehältnis zugewandt ist, basierend auf wenigstens einem Polyethylen und/oder wenigstens einem olefinisches Copolymerisat aus Ethylen und wenigstens einem α-Olefin mit wenigstens 4C-Atomen, vorzugsweise Buten, Hexen und/oder Octen auf. Vorzugsweise kann das Polyethylen ein Polyethylen niedriger Dichte (LDPE) sein. Das zum Einsatz kommende olefinische Copolymerisat des Ethylens ist vorzugsweise ein lineares Polyethylen niedriger Dichte (LLDPE) oder ein metallocen-Polyethylen (mPE). Besonders bevorzugt basiert die siegelbare Innenschicht aus einer Mischung aus mPE, LLDPE und/oder LDPE. Ganz besonders bevorzugt basiert die Innenschicht auf einem m-PE oder auf einer Mischung aus 40 bis 90 Gew.% metallocen-Polyethylen und 60 bis 10 Gew.% eines Copolymerisats aus Ethylen und einem α-Olefin mit wenigstens 4C-Atomen, vorzugsweise 50 bis 70 Gew.% m-PE und 50 bis 30 Gew.% des Copolymerisats. Weiterhin bevorzugt ist als Polymerkomponente der Innenschicht eine Mischung aus 10 bis 40 Gew.% LLDPE, 80 bis 50 Gew.% LDPE und 0 bis 10 Gew.% einer modifizierenden Komponente wie z. B. ein Polybutylen und/oder übliche Additiven, wobei die Summe der Gew.% immer 100 Gew.% ergeben muss. Ebenfalls bevorzugt ist als Polymerkomponente der Innenschicht eine Mischung aus 20 bis 40 Gew.% m-PE und 80 bis 60 Gew.% LDPE.

Die andere Oberflächenschicht, d. h. die Außenschicht der mehrschichtigen Kunststoffolie, die bei einem aus der Folie hergestellten, gefüllten, erfindungsgemäßen Verpackungsbehältnis die außenliegende Schicht bildet, basiert vorzugsweise auf wenigstens einem Polypropylen und ggf. üblichen Additiven.
Die Außenschicht kann auch mehrlagig sein, wobei eine Lage aus einem Polyethylen, vorzugsweise einem LDPE, sein kann und das Verhältnis der Dicke dieser Lage zur Gesamtdicke der mehrlagigen Außenschicht im Bereich von 1:10 bis 1:20 liegt. Vorzugsweise liegt die Dicke der PE-Schicht im Bereich von 1 bis 2 µm.

Erfindungsgemäß siegelt die Innenschicht früher als die Außenschicht der mehrschichtigen Kunststoffolie.

Vorzugsweise weist die siegelbare Innenschicht eine Dicke von 5 bis 35 µm, vorzugsweise von 15 bis 30 µm auf. Die Dicke der Außenschicht beträgt vorzugsweise 15 bis 40 µm, besonders bevorzugt 15 bis 30 µm.

In einer bevorzugten Ausführungsform ist die Außenschicht biaxial gereckt.

Vorzugsweise liegt das Reckverhältnis im Bereich von 1 bis 3 bis 1 zu 10 in Längsrichtung und 1 zu 5 bis 1 zu 13 in Querrichtung.

Zwischen der Außenschicht und der Innenschicht können noch weitere Zwischenschichten vorliegen, vorzugsweise mindestens eine Zwischenschicht aus einem thermoplastischen, olefinischen Polymerisat, vorzugsweise aus Polypropylen, Polyethylen und/oder einem Propylen-Copolymerisat.

Darüber hinaus kann die erfindungsgemäß zum Einsatz kommende mehrschichtige Kunststoffolie auch eine Barriereschicht, insbesondere eine Sauerstoff-, Feuchtigkeit- und/oder Aromabarriereschicht aufweisen, die bevorzugt auf Polyvinylidenchlorid, einem Ethylen Vinylalkohol-Copolymerisat oder Polyamid (PA), vorzugsweise einem aliphatischen Polyamid, wie Polyamid-6, basiert. In einer weiteren bevorzugten Ausführungsform kann die Barriereschicht biaxial gereckt sein.

Die Schichtdicke der Barriereschicht kann in einem Bereich von 3 bis 40 µm, vorzugsweise 5 bis 20 µm, variieren.

Sofern notwendig, kann die mehrschichtige Kunststoffolie auch Haftvermittlerschichten basierend auf üblichen Haftvermittler-Polymeren aufweisen, insbesondere zwischen der Schichte aus Olefinpolymeren und der Barriereschicht.

Vorzugsweise basiert die Haftvermittlerschicht auf einem mit Maleinsäureanhydrid-Einheiten gepropften Polyethylen.

Die Außenschicht kann die üblichen Additive, wie Antiblock-, Gleitmittel und Antistatika in üblichen, dem Fachmann bekannten Mengen enthalten.

Die Herstellung als Verpackungsmaterial zum Einsatz kommenden mehrschichtigen Kunststoffolie ist dem Fachmann bekannt und kann nach üblichen Verfahren mit gängigen Maschinen durch Extrusion, Coextrusion und/oder Laminierung erfolgen, wobei Laminierung bevorzugt ist. Die zum Einsatz kommenden, flexiblen mehrschichtigen Kunststoffolien sind vorzugsweise transparent und/oder transparent eingefärbt und können einen Druck, vorzugsweise innenliegend, aufweisen.
**Figur 1** zeigt eine erfindungsgemäße Verpackung in Draufsicht.
**Figur 2** zeigt eine perspektivische Draufsicht der Verpackung gemäß Figur 1 im geöffneten Zustand.
**Figur 3** zeigt eine weitere Ausführungsform der erfindungsgemäßen Verpackung in Draufsicht.
**Figur 4** zeigt eine perspektivische Draufsicht der Verpackung gemäß Figur 3 im geöffneten Zustand.
**Figur 5** zeigt einen Längsschnitt I-I der erfindungsgemäßen Verpackung gemäß Figur 3.

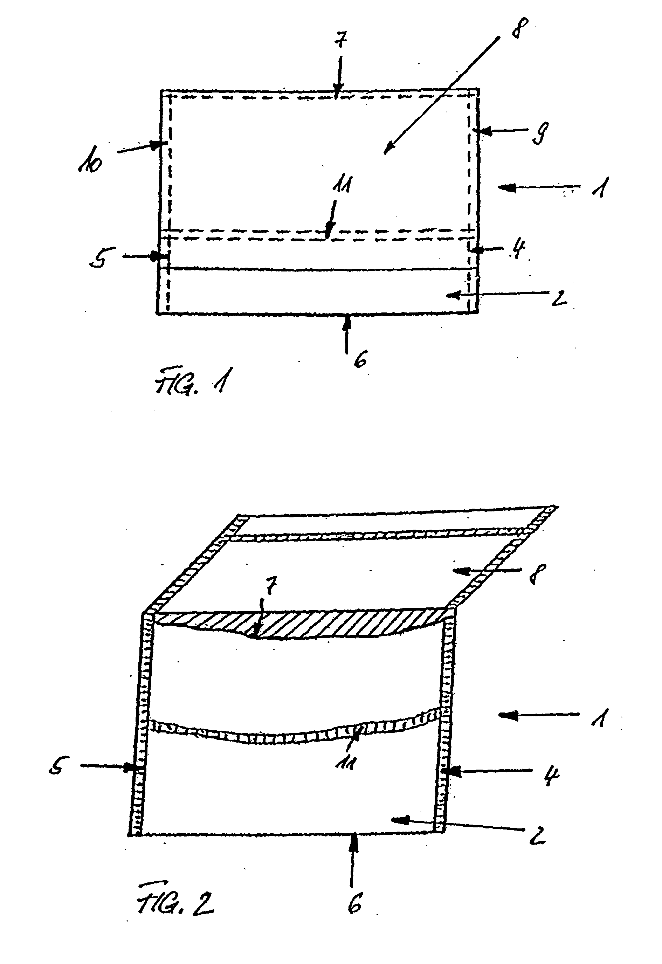

In **Figur 1** wird eine Ausführungsform der erfindungsgemäßen Verpackung (1) gezeigt, die aus einer einzigen Folienbahn der vorstehend beschriebenen mehrschichtigen Kunststoffolie hergestellt worden ist. Die Verpackung umfaßt einen Beutel mit einer Öffnung (7), aus der das verpackende Gut entnommen wird; der Beutel ist aus einer Vorderwand (2) und einer Rückwand (3) durch Faltung der Folie entlang der Faltungslinie (6) gebildet. Durch eine von einem Überstand der Rückwand (3) gebildeten und in Höhe der Öffnung (7) des Beutels auf die Vorderwand (2) gefaltete Verschlußlasche (8) ist die Verpackung mit Hilfe der Verschlußlasche (8) durch längsseitiges Versiegeln (9, 10) und transversales Versiegeln (11) der Innenschicht der Verschlußlasche (8) gegen die Außenschicht der Vorderwand (2) verschlossen. Die transversale Siegelnaht (11) ist in einem Abstand von dem Ende der Verpackungslasche angebracht, damit zum Öffnen der Verpackung ein leichterer Zugriff gewährleistet ist. Vorzugsweise ist die transversale Siegelnaht peelbar. Zwischen der transversalen Siegelnaht (11) und dem Ende der Verschlußlasche (8) kann vertikal bzw. horizontal zu der transversalen Siegelnaht (11) eine weitere Öffnungshilfe, die nicht gezeigt ist, in Form eines Streifens aus Kunststoffmaterial angebracht sein, der mit der außenliegenden bzw. innenliegenden Oberfläche der Verschlußlasche fest versiegelt ist und bei einer vertikalen Anordnung einen über das Ende der Verschlußlasche hinausragendes Teil aufweist. Der Streifen ist vorzugsweise mit einem selbsthaftenden Material an seiner Unterseite ausgerüstet und kann nach dem ersten Öffnen der erfindungsgemäßen Verpackung ggf. nach Abziehen einer Schutzfolie zum Wiederverschließen verwendet werden. Diese Ausrüstung bzw. dieser Aufbau liegt vorzugsweise auch bei einer horizontalen Anordnung des Streifens vor.

**Figur 2** zeigt eine perspektivische Darstellung der erfindungsgemäßen Verpackung gemäß Figur 1, aus der die Öffnung (7) zum Entnehmen der verpackten Güter, vorzugsweise der Lebensmittel, besonders bevorzugt von Blockkäse, Käsescheiben oder Reibekäse, zu erkennen ist. Darüber hinaus sind auf der Vorderwand (2) der erfindungsgemäßen Beutelverpackung noch Reste der zum Verschließen der Verschlußlasche (8) transversal angebrachten Siegelnaht (11) zu erkennen.

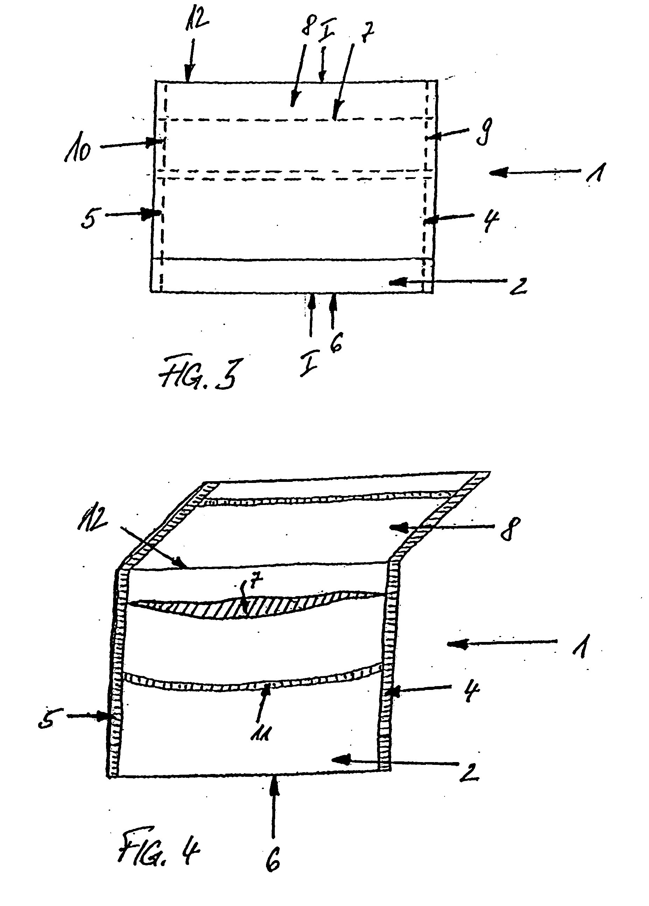

**Figur 3** zeigt eine weitere Ausführungsform der erfindungsgemäßen Verpackung, die sich zu der in Figur 1 dargestellten Verpackung insofern unterscheidet, dass sich die Öffnung (7) zum Entnehmen des verpackten Gutes in einem Abstand von der Faltungslinie (12) der Verschlußlasche befindet.

**Figur 4** zeigt wieder eine perspektivische Darstellung der Verpackung gemäß Figur 3 im geöffneten Zustand, wobei wieder die auf der Vorderwand der Verpackung verbleibenden Reste der transversalen Siegelnaht (11) nach dem Öffnen der Verschlußlasche zu erkennen sind.

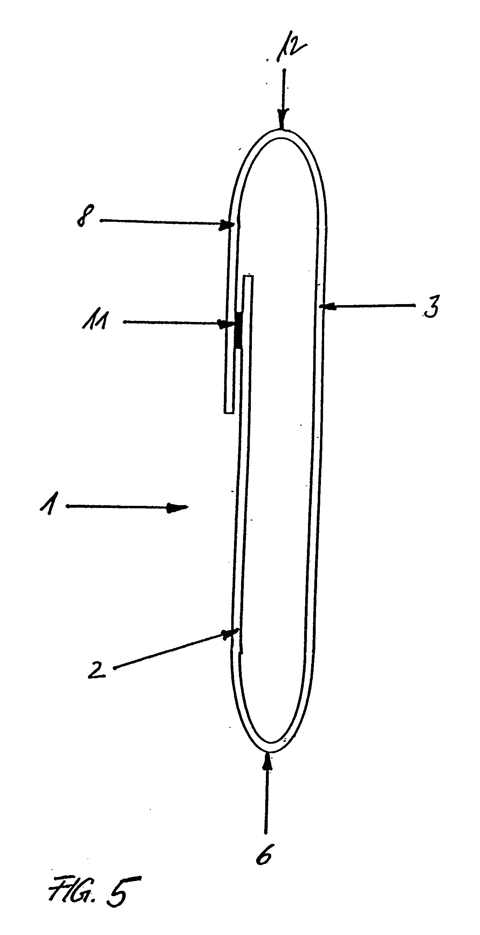

**Figur 5** zeigt einen Längsschnitt I-I der Verpackung gemäß Figur 3, aus dem die Beutelform der erfindungsgemäßen Verpackung klar zu erkennen ist. Das verpackte Gut ist nicht dargestellt.

In einer weiteren bevorzugten Ausführungsform kann die erfindungsgemäße Verpackung in dem Boden (6) noch eine Faltung aufweisen, die der so erhaltenen sackförmigen Verpackung ein besseres Standvermögen verleihen kann.

Die erfindungsgemäßen Verpackungen können auf horizontalen oder vertikalen Verpackungsmaschinen, vorzugsweise Beutelverpackungsmaschinen, hergestellt werden, wie sie dem Fachmann bekannt sind. Vorzugsweise können die Verpackungen nach Verfahren, wie sie in der EP-A-0 696 991 offenbart sind, produziert werden. Die entsprechende Beschreibung wird hiermit durch Referenz eingeführt und gilt als Teil der vorliegenden Offenbarung.

**Figur 6** zeigt ein Kraft-Dehnungsdiagramm, das analog zu der nachstehend aufgeführten Methode zur Bestimmung der Siegelfestigkeit bestimmt wurde.

### Bestimmung der Siegelfestigkeit

Zur Bestimmung der Siegelfestigkeit zwischen der Verschlußlasche und der Vorderwand der erfindungsgemäßen Verpackung und damit des Öffnungsverhaltens wurden 2 Teststreifen der erfindungsgemäßen Folie in einer Breite von 10 mm und einer Länge von ca. 150 mm entnommen. Danach wurden die beiden Streifen parallel übereinander gelegt und die Innenseite basierend auf m-PE der erfindungsgemäß zum Einsatz kommen Kunststoffolie mit der Außenseite basierend auf Polypropylen mit einem Siegelgerät entlang der gesamten Breite von 10 mm miteinander versiegelt. Die Versiegelung wurde mit einem Siegelgerät (Model Typ HSG, Brugger München) bei 2,5 bar und 180°C eine Sekunde lang durchgeführt. Die Siegelbacken waren glatt, 10 mm breit und nur einseitig beheizt und einseitig mit Teflon beschichtet.

Die beiden mit einer Siegelnaht versehenen Teststreifen wurden an ihrem längeren, nicht versiegelten Enden in der Zugprüfungsmaschine so befestigt, dass die voneinander zu trennenden Folien einen Winkel von ca. 180 °C bildeten und mit einer Geschwindigkeit von 200 mm/min getrennt werden. Die anderen nicht versiegelten Enden wurden dabei nicht in einem bestimmten Winkel fixiert. Die Messtrecke bzw. Messdauer war so lange, bis die Siegelnaht von 20 mm aufging. Über der Messtrecke des Siegelbereichs wurde die maximale und mittlere Kraft zur Trennung bestimmt.

Als Meßgerät für die Prüfung wurde eine rechnergesteuerte Zugprüfungsmaschine Zwick Z 2,5 (Kraftmesskopf 100 N) verwendet.

Die in N gemessene Kraft entspricht der Kraft, die benötigt wird, die voneinander zu trennenden beiden Teststreifen entlang der Siegelnaht von 2 cm zu trennen. Sie wird in Figur 6 im Verhältnis zur relativen Längenzunahme des Teststreifens (in %) aufgetragen.

Besonders bevorzugt eignet sich zur Herstellung der erfindungsgemäßen Verpackung als Verpackungsmaterial eine mehrschichtige Kunststoffolie mit folgendem Schichtaufbau:
a) eine Außenschicht basierend auf Polypropylen,
b) eine daran angrenzende Schicht aus Polypropylen,
c) eine Haftvermittlerschicht basierend auf gepfropften Maleinsäureanhydrid auf Polyethylen,
d) eine Barriereschicht aus Polyamid,
e) eine Haftvermittlerschicht basierend auf gepropften Maleinsäureanhydrid auf Polyehtylen
1 f) eine siegelbare Innenschicht basierend auf einer Mischung aus m-PE und einem Copolymerisat aus Ethylen und einem α-Olefin mit wenigstens 4C-Atomen
   oder
2 f) eine siegelbare Innenschicht basierend auf einer Mischung aus m-PE und LDPE
   oder
3 f) eine siegelbare Innenschicht basierend auf einer Mischung aus LLDPE und LDPE und Polybutylen,
wobei die Außenschicht a) ggf. mehrlagig sein kann und/oder bei 3 f) als Innenschicht ggf. keine Zwischenschicht aus Polyprpylen vorliegt.

## Patentansprüche

1. Verpackung (1) aus einer flexiblen, siegelbaren, mehrschichtigen Kunststoffolie in Form eines Sackes oder Beutels bestehend aus einer Vorderwand (2) und einer Rückwand (3), die einander gegenüberliegen und durch zwei Seitensiegelnähte (4, 5) zu einem Sack oder Beutelschlauch versiegelt sind, dessen dem Boden (6) des Schlauches oder Sackes gegenüberliegendes, offenes Kopfende (7) durch eine von einem Überstand der Rückwand (3) gebildete und an oder in die Nähe des offenen Kopfendes (7) auf die Vorderwand (2) gefaltete Verschlußlasche (8) durch längsseitliches Versiegeln (9, 10) und transversales Versiegeln (11) der Innenschicht der Lasche (8) gegen die Außenschicht der Vorderwand (2) des Beutels verschlossen ist, **dadurch gekennzeichnet, dass** die mehrschichtige Kunststoffolie eine dem Füllgut zugewandte, siegelbare Innenschicht als Oberflächenschicht aus wenigstens einem Polyethylen und/oder wenigstens einem olefinischen Copolymerisat aus Ethylen und wenigstens einem α-Olefin mit mindestens 4C-Atomen und als Außenschicht auf der anderen Oberfläche der mehrschichtigen Kunststoffolie eine Schicht aus wenigstens einem Polypropylen und ggf. übliche Additive aufweist.

2. Verpackung nach Anspruch 1, **dadurch gekennzeichnet, dass** die Außenschicht biaxial gereckt ist.

3. Verpackung nach einem der Ansprüche 1 oder 2, **dadurch gekennzeichnet, dass** das Polyethylen ein Polyethylen niedriger Dichte (LDPE) und das olefinische Copolymerisat ein Copolymerisat aus Ethylen und Buten, Hexen und/oder Octen ist.

4. Verpackung nach einem der Ansprüche 1 bis 3, **dadurch gekennzeichnet, dass** das olefinische Copolymerisat ein lineares Polyethylen niedriger Dichte (LLDPE) oder ein metallocen-Polyethylen (m-PE) ist.

5. Verpackung nach Anspruch 1 bis 4, **dadurch gekennzeichnet, dass** die siegelbare Innenschicht auf einem linearen Polyethylen niedriger Dichte (LLDPE), einem metallocen-Polyethylen (m-PE) oder einem Polyethylen (LDPE) niedriger Dichte basiert.

6. Verpackung nach Anspruch 5, **dadurch gekennzeichnet, dass** die siegelbare Innenschicht auf einer Mischung aus 90 bis 40 Gew.% m- PE und 10 bis 60 Gew.% eines Ethylen-α-Olefin Copolymerisats als Polymerkomponente basiert.

7. Verpackung nach Anspruch 5, **dadurch gekennzeichnet, dass** die siegelbare Innenschicht auf 70 bis 50 Gew.% metallocen-Polyethylen und 30 bis 50 Gew.% LLDPE basiert.

8. Verpackung nach Anspruch 5, **dadurch gekennzeichnet, dass** die siegelbare Innenschicht auf metallocen-PE basiert.

9. Verpackung nach Anspruch 5, **dadurch gekennzeichnet, dass** die siegelbare Innenschicht auf einer Mischung aus 20 bis 40 Gew.% m-PE und 80 bis 60 Gew.% LDPE als Polymerkomponente basiert.

10. Verpackung nach Anspruch 5, **dadurch gekennzeichnet, dass** die siegelbare Innenschicht aus einer Mischung aus 10 bis 40 Gew.% LLDPE, 80 bis 50 Gew.% LDPE und 0 bis 10 Gew.% modifizierender Komponenten besteht, wobei die Gesamtsumme der Gew.% immer 100 Gew.% ergeben muss.

11. Verpackung nach einem der Ansprüche 1 bis 10, **dadurch gekennzeichnet, dass** die Außenschicht mehrlagig ist.

12. Verpackung nach Anspruch 11, **dadurch gekennzeichnet, dass** die mehrlagige Außenschicht eine Lage aus einem Polyethylen, vorzugsweise LDPE umfasst, wobei das Verhältnis der Dicke dieser Lage zur Gesamtdicke der mehrlagigen Außenschicht im Bereich von 1:10 bis 1:20 liegt.

13. Verpackung nach einem der Ansprüche 1 bis 12, **dadurch gekennzeichnet, dass** die mehrschichtige Kunststoffolie zwischen der Außenschicht und der Innenschicht ggf. eine Schicht aus einem thermoplastischen, olefinischen Polymerisat, ggf. eine Barriereschicht und ggf. zumindest eine Haftvermittlerschicht umfaßt.

14. Verpackung nach Anspruch 13, **dadurch gekennzeichnet, dass** die Zwischenschicht auf wenigstens einem thermoplastischen, olefinischen Polymerisat, vorzugsweise auf Polypropylen, Polyethylen und/oder Propylen-Copolymerisat basiert.

15. Verpackung nach einem der Ansprüche 13 oder 14, **dadurch gekennzeichnet, dass** die mehrschichtige Kunststoffolie als Barriereschicht eine Schicht aus wenigstens einem Polyamid, vorzugsweise einem aliphatischen Polyamid enthält.

16. Verpackung nach Anspruch 15, **dadurch gekennzeichnet, dass** das Polyamid biaxial gereckt ist.

17. Verpackung nach einem der Ansprüche 13 bis 16, **dadurch gekennzeichnet, dass** die mehrschichtige Kunststoffolie folgenden Schichtaufbau aufweist:
a) eine Außenschicht basierend auf Polypropylen,
b) eine daran angrenzende Schicht aus Polypropylen,
c) eine Haftvermittlerschicht,
d) eine Barriereschicht aus Polyamid,
e) eine Haftvermittlerschicht,
f) eine siegelbare Innenschicht basierend auf einer Mischung aus m-PE und einem Copolymer aus Ethylen und einem α-Olefin mit wenigstens 4C-Atomen als Polymerkomponente.

18. Verpackung nach einem der Ansprüche 1 bis 17, **dadurch gekennzeichnet, dass** die mehrschichtige Kunststoffolie ein innenliegendes Druckbild aufweist.

19. Verpackung nach einem der Ansprüche 1 bis 18 zum Verpacken von verderblichen Lebensmitteln, vorzugsweise Block- oder Reibekäse.

20. Verpackung nach einem der Ansprüche 1 bis 19, **dadurch gekennzeichnet, dass** die Verschlußlasche (8) als Öffnungshilfe unterhalb der transversalen Versiegelung einen selbstklebenden, vertikal oder horizontal zur transversalen Versiegelung angebrachten Streifen aus Kunststoffmaterial aufweist, der nach dem ersten Öffnen der verschlossenen Verpackung zum Wiederverschließen der Verschlußlasche (8) dient.
